# EUROPEAN PATENT APPLICATION

(11) **EP 3 690 300 A1**
(43) Date of publication of application: **05.08.2020**
(21) Application number: 18862911.7
(22) Date of filing: 29.09.2018
(51) Int. Cl.: F16N 11/08, F16C 33/66

(54) **GREASE-LUBRICATED BEARING SYSTEM**

(30) Priority: 29.09.2017 CN 201710949637
(71) Applicant: Zhengzhou Autol Technology Co., Ltd., Zhengzhou, Henan 450001 (CN)
(72) Inventor: ZHAO, Daping, Zhengzhou Henan 450001 (CN); ZHU, Xianghua, Zhengzhou Henan 450001 (CN); SI, Yankai, Zhengzhou Henan 450001 (CN)
(74) Representative: Gulde & Partner
(86) International application number: PCT/CN2018/108819
(87) International publication number: WO 2019/062977

(57) **Abstract**

A grease-lubricated bearing system includes a bearing structure and a grease circulation drive device. A lubricating space for storing lubricating grease is arranged between an outer ring (1) and an inner ring (2) of the bearing structure. The bearing structure is provided with a grease injection hole (4) and a grease discharge hole (5) which are connected to the lubricating space. The grease discharge hole is connected to a grease pumping port (15) of the grease circulation drive device, and a grease outlet (10) of the grease circulation drive device is connected to the grease injection hole of the bearing. At least one of a grease filter (20), a cooling device (23) and a grease quality detection device (27) is arranged in series between the grease circulation drive device and the grease injection hole. The grease circulation drive device can clean harmful substances to maintain an optimal lubrication state and prolong the duration of the optimal lubrication state, so as to obtain a favorable lubrication effect and extend the service life of the bearing. After the grease is cooled and has improved fluidity by the cooling device, the grease is reinjected into the bearing to achieve the function of restoring the lubrication characteristics of the grease.

## Description

### TECHNICAL FIELD

The present disclosure relates to grease-lubricated bearings, and more particularly, to a grease-lubricated bearing system capable of filtering and/or cooling grease.

### BACKGROUND

The liquid oil lubrication method is one of two main lubrication methods for bearings. In the liquid oil lubrication method, bearings must be arranged inside the box and lubricating oil is stored in the box. This liquid oil lubrication method has a good lubricating effect with high cleanliness, but it is not suitable for all types of bearings because some bearings, such as bearings used in wind power generation equipment and building machinery, cannot be arranged inside the box, due to grease used for lubricating these bearings. Grease has a high viscosity and thus is difficult to flow out when the lubricating space between the inner ring and outer ring of the bearing is completely sealed. After being used for a period of time, the grease ages, hardens and has poor fluidity, thus it cannot be used for lubrication.

In order to improve the fluidity of the grease in the lubricating space, current grease supply devices are configured to provide grease for bearings. The present grease supply device includes a lubricating pump. The lubricating pump is generally a plunger pump or a gear pump. The lubricating pump is connected to a block distributor, and the distributor is connected to grease injection holes on each bearing, respectively. After the fresh grease is injected, the aged and used grease is extruded out from the grease outlet formed on the bearing structure, and grease collection bottles are arranged on the grease discharge holes to avoid environmental pollution.

Firstly, it is an arduous task, however, to purge these bottles that are not easy to reach, and, if the bottles are not emptied in time, the grease will flow from the grease collection bottle uncontrollably, which poses a potential hazard. Moreover, since the used grease with high viscosity and high hardness needs to be extruded out forcibly, the pressure of extruding the used grease is higher than the pressure resistance of the grease seal in the bearing in many cases,, which causes the used grease and even the new grease with low viscosity to flow out from the grease seal structure. Consequently, the grease cannot be collected in the grease collection bottle during flow out of the bearing structure, which not only pollute the environment, but also cause poor lubrication of the bearing, severely wastes the grease and increases the cost for lubrication.

In order to solve this problem, grease pumping and discharging device have been heretofore configured to pump the used grease inside the bearing, and the grease having poor fluidity will be pumped out by the grease pumping and discharging device. Generally, the grease pumped out will be directly discarded. In order to maximize the utilization value, the grease is pumped only when the grease has been aged and deteriorated, which cannot ensure a frequent drainage. However, in the operating process of the bearing, numerous particles and impurities generated from wear results in damage to the bearing and reduction in the service life of the bearing. Heat is also generated during the bearing's operation, which can be exacerbated when operating in a high-temperature environment, and thus the inside of the bearing reaches a higher temperature, which accelerates the deterioration of the grease.

### SUMMARY

The shortcomings in the prior art are as follows: numerous wearing particles and impurities are generated in the operating process of the bearing, which damages the structure of the bearing and reduces the service life of the bearing; the temperature inside the bearing is relatively high, which accelerates the deterioration of the grease; and the state of the grease in the bearing cannot be determined and treated in time. In order to solve the above-mentioned issues, the objective of the present disclosure is to provide a grease-lubricated bearing system to provide favorable conditions for a smooth operation of the grease-lubricated bearing system.

In order to achieve the above-mentioned objective, the grease-lubricated bearing system of the present disclosure adopts the following technical solutions.

A grease-lubricated bearing system includes a bearing structure and a grease circulation drive device. A lubricating space configured to store lubricating grease is arranged between the outer ring and the inner ring of the bearing structure. The bearing structure is provided with a grease injection hole and a grease discharge hole. The grease injection hole and the grease discharge hole are connected to the lubricating space. The grease discharge hole is connected to a grease pumping port of the grease circulation drive device, and a grease outlet of the grease circulation drive device is connected to the grease injection hole of the bearing. At least one of a grease filter, a cooling device and a grease quality detection device is arranged in series between the grease circulation drive device and the grease injection hole.

The grease filter and/or the cooling device are arranged in series between the grease circulation drive device and the grease injection hole.

The bearing structure is provided with a breathing port.

An air filter is arranged on the breathing port.

A two-position three-way valve is arranged in series in front of the grease injection hole, and a third grease port of the two-position three-way valve is connected to a waste grease storage device.

The bearing structure is provided with an grease supply hole, and the grease supply hole is connected to a grease supply device.

The grease circulation drive device is provided with an independent drive system.

The grease-lubricated bearing system is further provided with an electric control system, wherein the electric control system can automatically control the grease circulation drive device and the grease supply device to start and cease according to a preset working interval and working duration.

The grease circulation drive device includes a grease pumping device, and the grease pumping device includes a housing. A plunger is hermetically arranged on one end of the inner cavity of the housing in a slidable manner, and the other end of the housing is provided with a grease discharge port, wherein the grease discharge port is connected to the inner cavity of the housing and functions as the grease outlet. A one-way valve is arranged between the grease discharge port and the grease injection hole of the bearing to allow grease to flow into the grease injection hole of the bearing from the grease discharge port. An grease pumping port is arranged on the side wall of the housing, and the grease pumping port is connected to the grease discharge hole. The plunger is driven by a power device to reciprocate.

The power device includes a hydraulic grease cylinder, wherein the hydraulic grease cylinder are integrated to form on the grease pumping device, the housing of the hydraulic grease cylinder and the housing of the grease pumping device are integrated to form one piece, and a piston of the hydraulic grease cylinder is connected to the plunger of the grease pumping device.

The power device includes an electric push rod, wherein the electric push rod and the grease pumping device are integrated to form one piece, the housing of the electric push rod and the housing of the grease pumping device are integrated to form one piece, and the push rod of the electric push rod is connected to the plunger of the grease pumping device.

Selected from the grease filter, the cooling device and the grease quality detection device, the grease filter and the grease quality detection device are arranged in series between the grease circulation drive device and the grease injection hole. The grease quality detection device is located downstream of the grease filter and configured to detect the filtering effect of the grease filter.

Selected from the grease filter, the cooling device and the grease quality detection device, the cooling device and the grease quality detection device are arranged in series between the grease circulation drive device and the grease injection hole. The grease quality detection device is located downstream of the cooling device and configured to detect the cooling effect of the cooling device.

The grease quality detection device is arranged between the grease circulation drive device and the grease injection hole, and at least one of the grease filter and the cooling device is arranged in series between the grease circulation drive device and the grease injection hole, wherein the grease quality detection device is located on a most upstream side and configured to detect grease quality of the grease in the bearing structure.

In the grease-lubricated bearing system of the present disclosure, the grease circulation drive device is connected to the grease discharge hole and the grease injection hole of the bearing to form a fully-closed structure, which realizes internal circulation of the grease, maintains a constant amount of grease and constant pressure inside the lubrication space, avoids the bearing pollution, the grease pollution and the sealing leakage risk which are caused by the addition of the new grease, and avoids the possibility of a bearing failure caused by the pollution. At least one of the grease filter, the cooling device and the grease quality detection device is arranged in series between the grease circulation drive device and the grease injection hole. The cooling device has a cooling function. The temperature of the grease decreases by the cooling device, thereby improving the fluidity of the grease. Then, the grease is reinjected into the bearing to achieve the function of restoring the lubrication characteristics of the grease, which effectively solves the technical problem of the absence of cooling function for the grease lubrication method.

In addition, the grease is in an optimal lubrication state after being operated by the device, the grease circulation drive device can clean the harmful substances (e.g., impurities, wearing particles, etc.) by the grease filter to maintain the optimal lubrication state and prolong the duration of the optimal lubrication state, so as to obtain favorable lubrication and extend the service life of the bearing. The grease treated by the grease circulation drive device has less impurities and wearing particles, and thus has an enhanced lubricating performance, which can prolong the service life of the grease and reduce the lubricating cost. When the grease quality detection device is arranged and located most upstream, namely, closest to the grease discharge hole of the bearing structure, the grease quality detection device can be used for detecting the quality of the grease in the bearing structure in real time to accurately grasp the time for replacing the grease. The grease quality detection device can be used for detecting the effect of the grease filter or the cooling device when located downstream of the grease filter or the cooling device.

A two-position three-way valve is arranged in serise in front of the grease injection hole of the bearing system, and the third grease port of the two-position three-way valve is connected to a waste grease storage device. When the grease inside the bearing needs to be replaced, the grease can be discharged into the waste grease storage device through the two-position three-way reversing valve to replace the grease.

In the present disclosure, the electric push rod is used as the driving device of the grease pumping device of the pumping device. The electric push rod has a simple structure and is powered by electric power. Electric power is a clean energy source and can meet the environmental requirements.

The air filter is arranged on the breathing port of the bearing structure of the bearing system, which can ensure that the air entering the inside of the bearing structure is clean air to prevent pollutants from entering the bearing structure and polluting the grease.

### BRIEF DESCRIPTION OF THE DRAWINGS

FIG. 1 is a schematic diagram showing the overall structure of an embodiment of the grease-lubricated bearing system according to the present disclosure;
FIG. 2 is a structural schematic diagram of the bearing structure in FIG. 1;
FIG. 3 is a structural schematic diagram of a first embodiment of the grease pumping device in FIG. 1;
FIG. 4 is a structural schematic diagram of a second embodiment of the grease pumping device in FIG. 1;
FIG. 5 is a schematic diagram showing the overall structure of a third embodiment of the grease-lubricated bearing system according to the present disclosure;
FIG. 6 is a schematic diagram showing the overall structure of a fourth embodiment of the grease-lubricated bearing system according to the present disclosure;
FIG. 7 is a schematic diagram showing the overall structure of a fifth embodiment of the grease-lubricated bearing system according to the present disclosure; and
FIG. 8 is a schematic diagram showing the overall structure of a sixth embodiment of the grease-lubricated bearing system according to the present disclosure.

In the drawings: 1, outer ring; 2, inner ring; 3, breathing port; 4, grease injection hole; 5, grease discharge hole; 6, grease supply hole; 7, grease pumping device; 8, housing; 9, plunger; 10, grease outlet; 11, valve core; 12, valve seat; 13, reset spring; 14, conversion port; 15, grease pumping port; 16, distributor; 17, power pump; 18, motor; 19, two-position four-way reversing valve; 20, grease filter; 21, oil inlet and discharge hole; 22, piston; 23. cooling device; 24, two-position three-way valve; 25, waste grease storage device; 26, grease supply pump; 27, grease quality detection device.

### DETAILED DESCRIPTION OF THE EMBODIMENTS

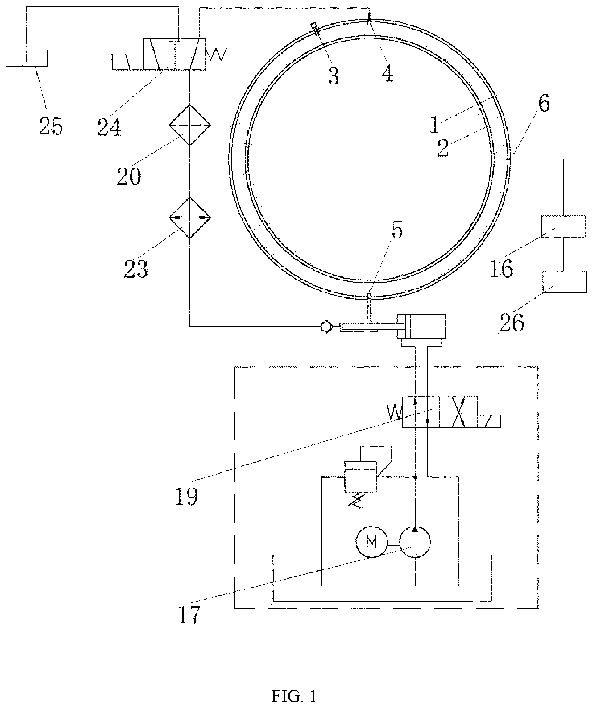

The first embodiment of a grease-lubricated bearing system is provided, as shown in FIGS. 1-3, the bearing structure of the present embodiment is a sliding bearing without rolling elements. An outer ring 1, an inner ring 2 and grease seals arranged at the two ends form a lubricating space, and the lubricating space is configured to store lubricating grease. The outer ring 1 of the bearing structure is provided with a grease injection hole 4, a grease discharge hole 5 and a breathing port 3. The grease injection hole 4, the grease discharge hole 5 and the breathing port 3 are all connected to the lubricating space. An air filter is arranged on the breathing port 3.

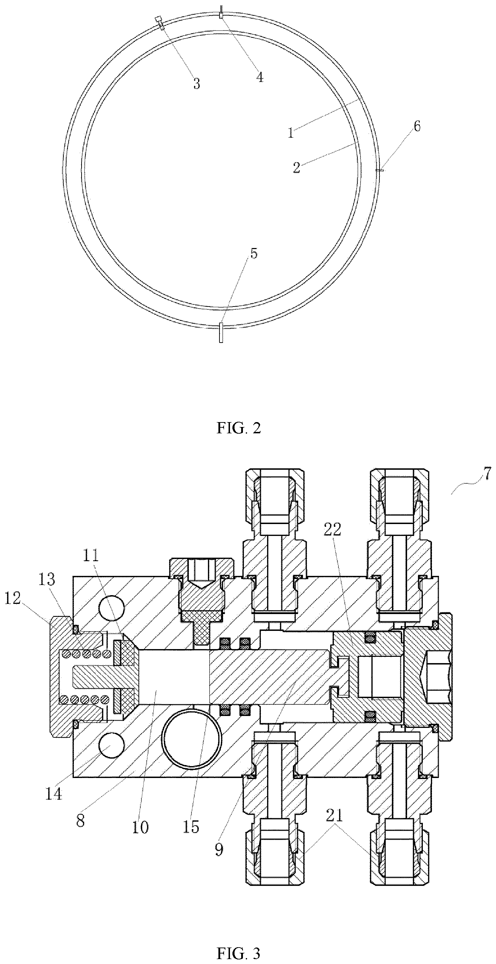

A grease circulation drive device is connected to the grease discharge hole 5, wherein, the grease circulation drive device here is a grease pumping device 7. As shown in FIG. 3, the grease pumping device 7 is provided with a housing 8, a plunger 9 is hermetically arranged on one end of the inner cavity of the housing 8 in a slidable manner, and the other end of the housing 8 is provided with a grease outlet 10. The grease outlet 10 is connected to both the inner cavity of the housing 8 and the grease injection hole 4. A one-way valve structure is integrated on one end of the housing 8 adjacent to the grease outlet 10 to form one piece. The one-way valve structure and the grease pumping device 7 share the housing. A valve core 11 of the one-way valve structure is assembled on the housing 8 in a slidable manner. A reset spring 13 is arranged between the valve core 11 and a valve seat 12 fixed on the housing 8. The valve core 11 would seal the grease outlet 10 under the action of the reset spring 13. The housing 8 is further provided with a conversion port 14. The conversion port 14 is connected to the inner cavity of the housing 8 on the other side of the valve core 11 opposite to the grease outlet 10, namely, the conversion port 14 is connected to the grease outlet 10 through the one-way valve structure. The grease injection hole 4 is directly connected to the conversion port 14, namely, a one-way valve is arranged between the grease outlet 10 and the grease injection hole 4 to allow the grease to flow from the grease outlet 10 to the grease injection hole 4. A side wall of the housing 8 is provided with a grease pumping port 15, and the grease pumping port 15 is connected to the grease discharge hole 5 of the bearing structure. The plunger 9 is driven by a power device to reciprocate. In the present embodiment, the power device includes a hydraulic grease cylinder, and the hydraulic grease cylinder is also integrated on the grease pumping device 7, namely, the hydraulic grease cylinder and the grease pumping device 7 share the same housing. A piston 22 of the hydraulic grease cylinder is connected to the plunger 9, and the diameter of the piston 22 is larger than the diameter of the plunger 9. The housing 8 is provided with an oil inlet and discharge hole 21 matched with the piston. A power pump 17 of the hydraulic grease cylinder is independent and thus does not share a structure with any other equipment, namely, the pumping and discharging device is provided with an independent drive system. The power pump 17 is driven by a motor 18. A two-position four-way reversing valve 19 is arranged between the hydraulic grease cylinder and the power pump 17.

A grease filter 20 and a cooling device 23 are arranged in series between the grease pumping device 7 and the grease injection hole 4. The cooling device 23 is arranged adjacent to the grease pumping device, and the grease filter 20 is arranged adjacent to the grease injection hole 4.

A two-position three-way valve 24 is arranged in series in front of the grease injection hole 4. The two-position three-way valve 24 is provided with three grease ports, wherein two grease ports are used to connect the grease channels in series, and the third grease port is connected to a waste grease storage device 25.

The bearing structure is further provided with a grease supply hole 6, and the grease supply hole is connected to a grease supply device. The grease supply device is provided with a grease supply pump 26 whose grease outlet is connected to a distributor 16, and the grease supply hole 6 is connected to respective outlets of the distributor 16, respectively, to supply grease to the bearing structure.

The grease-lubricated bearing system is further provided with an electric control system, wherein the electric control system can automatically control the grease circulation drive device and the grease supply device to start and cease according to a preset working interval and working duration. The working interval and the working duration are inputted into the electric control system after being calculated according to the actual situation, to realize the control without creative efforts for those skilled in the art.

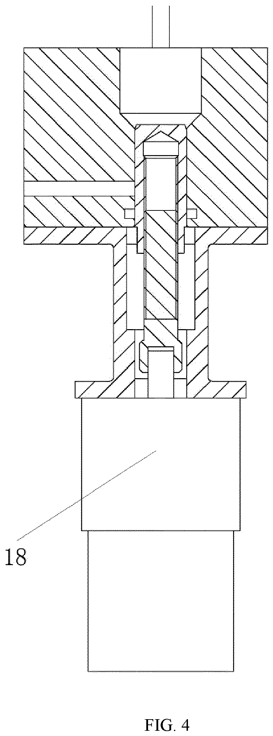

The second embodiment of the grease-lubricated bearing system is shown in FIG. 4, and the difference between the present embodiment and the first embodiment of the grease-lubricated bearing system is as follows. In the present embodiment, the plunger of the grease pumping device is driven by an electric push rod, and the electric push rod is driven by the motor 18, wherein the motor 18 here is a linear motor, and the grease pumping device has the same structure with the grease pumping device in the first embodiment.

In the above-mentioned embodiment, the grease filter and the cooling device are both employed, and in other embodiments, the grease filter or the cooling device can be separately employed.

In the above-mentioned embodiment, the grease pumping device of the grease-lubricated bearing system can also be driven by a pneumatic cylinder, and the pneumatic cylinder and the hydraulic cylinder have equivalent technical features.

In the above-mentioned embodiment, the cooling device 23 is arranged adjacent to the grease pumping device, and the grease filter 20 is arranged adjacent to the grease injection hole 4. In other embodiments, the positions of the cooling device 23 and the grease filter can be exchanged.

In the above-mentioned embodiment, the motor configured to drive the electric push rod is a linear motor, and in other embodiments, the motor can also be a common motor that converts a rotary motion into a linear motion by a worm drive.

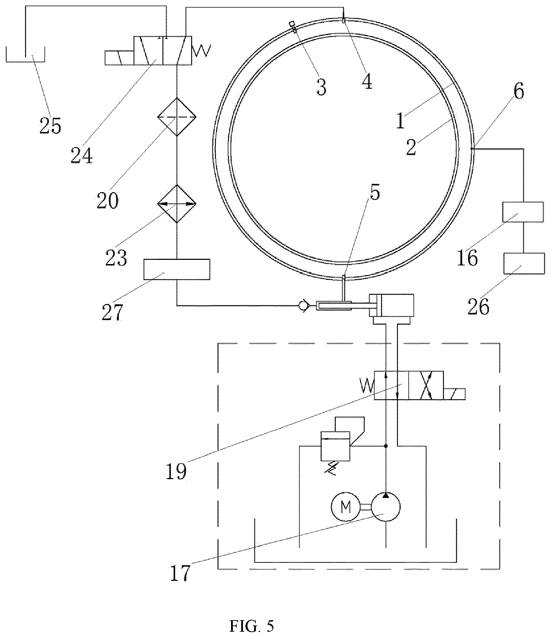

The third embodiment of the grease-lubricated bearing system is provided, as shown in FIG. 5, the difference between the present embodiment and the first embodiment of the grease-lubricated bearing system is as follows. In the present embodiment, a grease quality detection device 27, the grease filter 20 and the cooling device 23 are arranged in series between the grease circulation drive device and the grease injection hole. The parameters that can be detected by the grease quality detection device include: water content, turbidity, heat, mechanical abrasion, temperature and degree of aging. The configuration of the grease quality detection device is disclosed in the prior art and can specifically refer to the specification of the Chinese invention patent CN105612413A, which is hereby incorporated by reference, or adopt other products on the market, which is not repeatedly described herein.

In the present embodiment, the grease quality detection device 27 is arranged in front of the grease filter 20 and the cooling device 23 (upstream) and configured to detect the quality of the grease discharged from the grease discharge port of the lubricating space of the bearing structure, so as to determine whether the grease needs to be discharged to the waste grease storage device 25 through the two-position three-way valve 24.

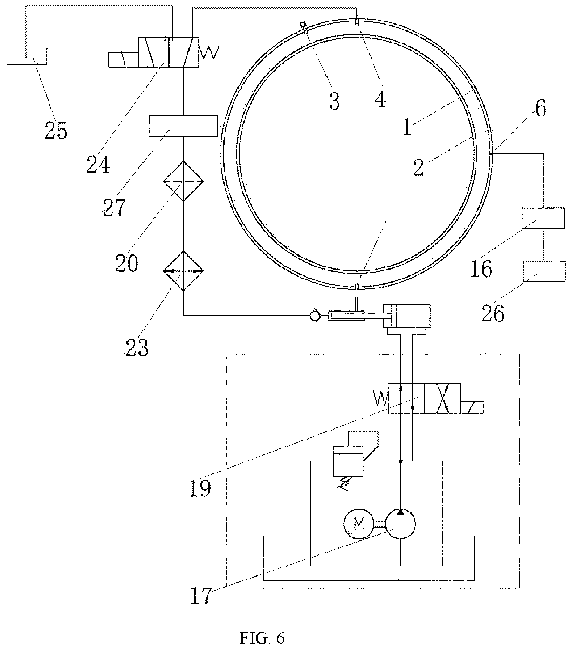

The fourth embodiment of the grease-lubricated bearing system is shown in FIG. 6, and the difference between the present embodiment and the third embodiment of the grease-lubricated bearing system is as follows. In the present embodiment, the grease quality detection device 27 is arranged behind the grease filter 20 and the cooling device 23 (downstream) and configured to detect the quality of the grease treated by the grease filter 20 and the cooling device 23, so as to determine whether the grease needs to be discharged to the waste grease storage device 25 through the two-position three-way valve 24. Meanwhile, the filtering effect of the grease filter 20 adjacent to the two-position three-way valve 24 can be determined to provide the basis for the necessity of replacing the grease filter 20.

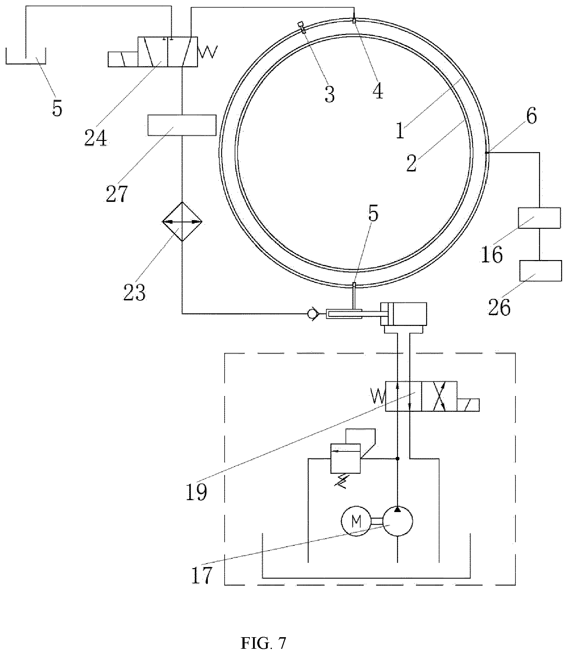

The fifth embodiment of the grease-lubricated bearing system is shown in FIG. 7, and the difference between the present embodiment and the fourth embodiment of the grease-lubricated bearing system is as follows. In the present embodiment, the grease filter is removed, and the grease quality detection device 27 can be used for determining the cooling effect of the cooling device 23 adjacent to the grease quality detection device 27, in order to provide the basis for the necessity of replacing or adjusting the cooling device 23.

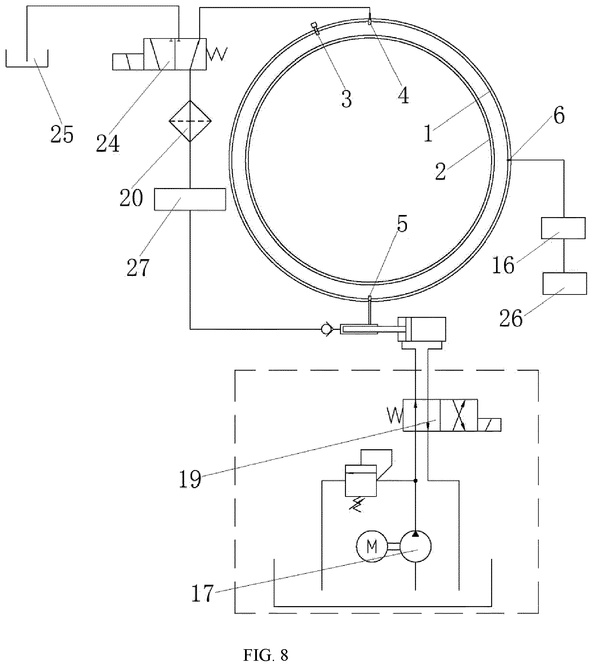

The sixth embodiment of the grease-lubricated bearing system is shown in FIG. 8, and the difference between the present embodiment and the third embodiment of the grease-lubricated bearing system is as follows. In the present embodiment, the cooling device is removed, and certainly, in other embodiments, the grease filter 20 can also be removed as needed.

## Claims

1. A grease-lubricated bearing system, comprising: a bearing structure and a grease circulation drive device; a lubricating space configured to store lubricating grease is arranged between an outer ring and an inner ring of the bearing structure; the bearing structure is provided with a grease injection hole and a grease discharge hole which are connected to the lubricating space, **characterized in that**, the grease discharge hole is connected to a grease pumping port of the grease circulation drive device, and a grease outlet of the grease circulation drive device is connected to the grease injection hole of the bearing; at least one of a grease filter, a cooling device and a grease quality detection device is arranged in series between the grease circulation drive device and the grease injection hole.

2. The grease-lubricated bearing system according to claim 1, **characterized in that**, the grease filter and/or the cooling device are arranged in series between the grease circulation drive device and the grease injection hole.

3. The grease-lubricated bearing system according to claim 2, **characterized in that**, the bearing structure is provided with a breathing port.

4. The grease-lubricated bearing system according to claim 3, **characterized in that**, an air filter is arranged on the breathing port.

5. The grease-lubricated bearing system according to claim 2, **characterized in that**, a two-position three-way valve is arranged in series in front of the grease injection hole, and a third grease port of the two-position three-way valve is connected to a waste grease storage device.

6. The grease-lubricated bearing system according to claim 5, **characterized in that**, the bearing structure is provided with a grease supply hole, and the grease supply hole is connected to a grease supply device.

7. The grease-lubricated bearing system according to any one of claims 2-6, **characterized in that**, the grease circulation drive device is provided with an independent drive system.

8. The grease-lubricated bearing system according to claim 7, **characterized in that**, the grease-lubricated bearing system is further provided with an electric control system, and the electric control system can automatically control the grease circulation drive device and the grease supply device to start and cease according to a preset working interval and working duration.

9. The grease-lubricated bearing system according to claim 8, **characterized in that**, the grease circulation drive device comprises a grease pumping device, the grease pumping device comprises a housing, wherein a plunger is hermetically arranged on one end of an inner cavity of the housing in a slidable manner, and the other end of the housing is provided with a grease discharge port, the grease discharge port is connected to the inner cavity of the housing and functions as the grease outlet; a one-way valve is arranged between the grease discharge port and the grease injection hole of the bearing to allow grease to flow into the grease injection hole of the bearing from the grease discharge port; a grease pumping port is arranged on the side wall of the housing, and the grease pumping port is connected to the grease discharge hole; the plunger is driven by a power device to reciprocate.

10. The grease-lubricated bearing system according to claim 9, **characterized in that**, the power device comprises a hydraulic grease cylinder, wherein the hydraulic grease cylinder and the grease pumping device are integrated to form one piece, a housing of the hydraulic grease cylinder and the housing of the grease pumping device are integrated to form one piece, and a piston of the hydraulic grease cylinder is connected to the plunger of the grease pumping device.

11. The grease-lubricated bearing system according to claim 9, **characterized in that**, the power device comprises an electric push rod, wherein the electric push rod and the grease pumping device are integrated to form one piece; the housing of the electric push rod and the housing of the grease pumping device are integrated to form one piece; and a push rod of the electric push rod is connected to the plunger of the grease pumping device.

12. The grease-lubricated bearing system according to claim 1, **characterized in that**, selected from the grease filter, the cooling device, and the grease quality detection device, the grease filter and the grease quality detection device are arranged in series between the grease circulation drive device and the grease injection hole; the grease quality detection device is located downstream of the grease filter and configured to detect a filtering effect of the grease filter.

13. The grease-lubricated bearing system according to claim 1, **characterized in that**, selected from the grease filter, the cooling device, and the grease quality detection device, the cooling device and the grease quality detection device are arranged in series between the grease circulation drive device and the grease injection hole; the grease quality detection device is located downstream of the cooling device and configured to detect a cooling effect of the cooling device.

14. The grease-lubricated bearing system according to claim 1, **characterized in that**, the grease quality detection device is arranged between the grease circulation drive device and the grease injection hole; at least one of the grease filter and the cooling device is arranged in series between the grease circulation drive device and the grease injection hole, and the grease quality detection device is located most upstream and configured to detect grease quality of the grease in the bearing structure.
